# EUROPÄISCHE PATENTSCHRIFT

(11) **EP 3 544 826 B1**
(45) Veröffentlichungstag und Bekanntmachung des Hinweises auf die Patenterteilung: **05.08.2020**
(21) Anmeldenummer: 17777027.8
(22) Anmeldetag: 28.09.2017
(51) Int. Cl.: B60C 9/20, B60C 9/00, D02G 3/48, D07B 1/06

(54) **FAHRZEUGLUFTREIFEN MIT EINER GÜRTELLAGE AUFWEISEND STAHL-MONOFILAMENTE**
PNEUMATIC VEHICLE TYRE WITH A BELT PLY HAVING STEEL MONOFILAMENTS
PNEU POUR VÉHICULE POURVU D'UNE NAPPE D'ARMATURE DE TRAVAIL POSSÉDANT DES MONOFILAMENTS EN ACIER

(30) Priorität: 25.11.2016 DE 102016223397; 16.12.2016 DE 102016225231
(43) Veröffentlichungstag der Anmeldung: 02.10.2019
(73) Patentinhaber: Continental Reifen Deutschland GmbH, 30165 Hannover (DE)
(72) Erfinder: PALAVRAS, Joana, 30165 Hannover (DE); WERNER, Viktoria, 30827 Garbsen (DE); NOVOSAD, Lubos, 02001 Puchov (SK)
(74) Vertreter: Finger, Karsten
(86) Internationale Anmeldenummer: PCT/EP2017/074572
(87) Internationale Veröffentlichungsnummer: WO 2018/095614

(56) Entgegenhaltungen:
- EP-A1- 0 849 098
- EP-A1- 1 433 868
- WO-A1-2016/098035

## Beschreibung

Die Erfindung betrifft einen Fahrzeugluftreifen mit einem Gürtel aus zwei oder mehr sich in einem Winkel kreuzenden, Festigkeitsträger aufweisenden Gürtellagen, wobei die Festigkeitsträger innerhalb jeder Gürtellage im Wesentlichen parallel und beabstandet zueinander angeordnet und in Kautschukmaterial eingebettet sind, wobei der Gürtel mindestens eine erste Gürtellage aufweist, deren Festigkeitsträger durch Stahl-Monofilamente der Festigkeitsträgerklasse Ultra-Tensile (UT) mit jeweils einer Zugfestigkeit von 3080 N/mm² bis 4190 N/mm² gebildet sind, wobei die Stahl-Monofilamente einen Durchmesser D von 0,33 mm bis 0,37 mm aufweisen.

Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Festigkeitsträgerlagen aufweisenden Gürtel auf, welcher häufig radial außen mit der Gürtelbandage abgedeckt ist. Die Gürtelbandage kann ein- oder mehrlagig ausgebildet sein und deckt zumindest die Gürtelränder ab.

Üblich ist, dass zur Herstellung einer Gürtellage Festigkeitsträger in Kautschuk eingebettet werden, indem eine Schar von im Wesentlichen parallel liegenden Festigkeitsträgern in Längsrichtung einen Kalander oder einen Extruder zur Ummantelung mit der Kautschukmischung durchlaufen. Diese Bahnen werden in der Regel quer zu ihrer Längsrichtung durchschnitten, so dass die Teile einzeln oder zusammengefügt als Festigkeitsträgerlagen im Reifen eingesetzt werden zu können.

Der aus zwei oder mehr sich in einem Winkel kreuzenden Gürtellagen bestehende Gürtel sorgt für die Steifigkeit der Lauffläche in Längs- und Querrichtung. Dieses dient beim Fahren der Kraftübertragung, verbessert die Seitenführung und verringert den Abrieb des Reifens.

Es ist bekannt und heutzutage üblich, Stahlkorde als Festigkeitsträger in den Gürtellagen des Gürtels einzusetzen. Die Stahlkorde sind innerhalb der Festigkeitsträgerlage im Wesentlichen parallel und beabstandet zueinander angeordnet und in Kautschukmaterial eingebettet. In PKW-Luftreifen verbaute Gürtellagen weisen häufig Stahlkorde der Konstruktion 2 x 0,30 mm auf, bei einer Einstellung von 80 epdm oder mehr. Die Kordkonstruktion 2 x 0,30 mm bedeutet, dass zwei Drähte (Monofilamente) von 0,30 mm Durchmesser miteinander zu einem Kord verdreht sind, so dass der Kord einen Durchmesser von ca. 0,60 mm hat. Nachteilig an den Gürtellagen mit vorgenannten Stahlkorden ist, dass diese vergleichsweise schwer an Gewicht und materialaufwendig sind, was sich nachteilig auf den Rollwiderstand auswirkt.

Es sind auch Gürtellagen bekannt, die als Festigkeitsträger Stahl-Monofilamente mit einem Radius von 0,30 mm aufweisen, wobei der Stahl die Festigkeitsträgerklasse High-Tensile (HT) mit einer Zugfestigkeit von kleiner als 3000 N/mm² aufweist. Hierdurch sind dünne Festigkeitsträgerlagen geschaffen, was sich vorteilhaft auf den Rollwiderstand auswirkt. Nachteilig an solchen Festigkeitsträgerlagen ist allerdings, dass die vorgenannten vergleichsweise dünnen Monofilamente aus HT-Stahl nach dem Einbetten in elastomeres Material von der Spulengeometrie rührende innere Spannungen aufweisen können, wodurch die resultierende Bahn eine Welligkeit aufweisen kann. Insbesondere an Schnittkanten der Bahn quer zur Erstreckungsrichtung der Festigkeitsträger kann es zu einer zumindest teilweisen Erhebung der Bahn kommen ("tip rising"). Hierdurch ist die Prozessierbarkeit, vor allem die Prozessierbarkeit beim Zusammenfügen von geschnittenen Bahnteilen zur Festigkeitsträgerlage, sowie die Herstellung des Reifens erschwert und verteuert

Darüber hinaus wird auf die Offenbarung von der EP1433868-A1 und der WO2016/098035 aufmerksam gemacht.

Die DE 697 08 355 T2 offenbart einen Fahrzeugluftreifen mit einer Gürtellage aufweisend Festigkeitsträger aus Stahl-Monofilamenten mit einem Durchmesser von 0,35 mm aus Stahl der Zugfestigkeit 3423 N/mm², welche mit einem Kordabstand von in etwa 129 epdm angeordnet sind. Die Stahl-Monofilamente weisen dabei einen Torsionswert von 61 Windungen mit einem Längenmaß vom 200fachen Durchmesser des Monofilaments auf. Die Torsion der Stahl-Monofilamente vermindert die vorbeschriebenen inneren Spannungen und erleichtert somit die Herstellung des Reifens. Allerdings ist eine solche Torsion der Stahl-Monofilamente mit einem zusätzlichen Prozessschritt in der Fertigung der Stahl-Monofilamente verbunden und somit aufwändig und kostenintensiv.

Es ist daher die Aufgabe der Erfindung, einen Fahrzeugluftreifen mit geringem Rollwiderstand bei gleichzeitig vereinfachter Herstellung kostengünstiger bereitzustellen.

Die Aufgabe wird gelöst, indem der Torsionswert der Stahl-Monofilamente in etwa null Windungen beträgt. Der Torsionswert eines Stahl-Monofilaments ist hierbei auf ein Längenmaß vom 200fachen Durchmesser des Stahl-Monofilaments bezogen.

Eine Torsion von in etwa null Windungen bedeutet im Sinne der Erfindung, dass das Stahl-Monofilament keinen extra Prozessschritt zum Erlangen einer Torsion durchlaufen hat. Das Stahl-Monofilament kann allerdings durchaus z.B. im Zuge der Aufbewahrung und/oder Verarbeitung, insbesondere durch Wickeln und/oder Abwickeln des Stahl-Monofilaments z.B. auf Spulen oder auf Trommeln eine geringe Torsion erlangen. Diese Torsion der im Reifen verbauten Stahl-Monofilamente beträgt dabei maximal drei Windungen, bezogen auf ein Längenmaß des 200fachen Durchmessers der jeweiligen Stahl-Mono filamente.

Ein Stahl der Festigkeitsträgerklasse Ultra-Tensile (UT) weist im Rahmen der Erfindung eine Zugfestigkeit von 3080 N/mm² bis 4190 N/mm² auf. Die "Zugfestigkeit" ist die Zugspannung, die benötigt wird, um einen Prüfkörper zu zerreißen. Sie wird berechnet aus der im Zugversuch ermittelten Bruchspannung bezogen auf den ursprünglichen Querschnitt des Prüfkörpers. Die Zugfestigkeit ist gemessen in Anlehnung an die ASTM D 2969, ASTM D 4975 und BISTA E6. Die Kraft-Dehnungskurve zur Ermittlung der Spannung ist gemessen in Anlehnung an die ASTM D 2969, ASTM D 4975 und BISTA E6.

Solche relativ dünnen Stahl-Monofilamente aus Stahl der Festigkeitsträgerklasse UT (Ultra-Tensile) mit einer Torsion von in etwa null Windungen eignen sich hervorragend für den Einsatz als Festigkeitsträger einer Gürtellage eines Fahrzeugluftreifens. Es hat sich gezeigt, dass Bahnen mit Stahl-Monofilamente aus Stahl der Festigkeitsträgerklasse UT selbst bei einem geringen Durchmessers D von 0,33 mm bis 0,37 mm der Stahl-Monofilamente eine sehr geringe Welligkeit und ein sehr geringes tip rising an Schnittkanten aufweisen, welche die Prozessierbarkeit und die Herstellung des Reifens nicht weiter negativ beeinflussen. Zudem entfällt der aufwändige Prozessschritt des Verdrehens der Stahl-Monofilamente zum Erlangen von Torsion. Hierdurch ist die Prozessierbarkeit erleichtert und die Herstellung des Reifens vereinfacht. Ein solcher Reifen kann kostengünstiger bereitgestellt werden. Gleichzeitig sind durch den weiterhin geringen Durchmesser der Stahl-Monofilamente das Gewicht und der Materialaufwand der ersten Gürtellage weiterhin gering gehalten und der Reifen weist weiterhin einen vorteilhaften Rollwiderstand auf.

Somit ist ein Fahrzeugluftreifen mit geringem Rollwiderstand bei gleichzeitig vereinfachter Herstellung kostengünstiger bereitgestellt.

Als besonders vorteilhaft bezüglich der Eigenschaften Prozessierbarkeit und Rollwiderstand hat es sich als Durchmesser der Stahl-Monofilamente ein Durchmesser D von 0,34 mm bis 0,36 mm, bevorzugt ein Durchmesser D von 0,35 mm, herausgestellt.

Im Rahmen der Erfindung wird der Durchmesser D in Formeln einheitenlos in mm (Millimetern) eingesetzt. Die Einheiten, in der die berechnete Größe angegeben ist, sind der Formel nachgereiht.

In einer vorteilhaften Ausführungsform weisen die Stahl-Monofilamente eine Zugfestigkeit von 3820 - 2000^{∗}D [N/mm²] bis 4850 - 2000^{∗}D [N/mm²] auf, wobei D den Durchmesser der Stahl-Monofilamente bezeichnet. Stahl-Monofilamente dieser Zugfestigkeit weisen eine besonders vorteilhafte Prozessierbarkeit auf. Für einen Durchmesser von D = 0,35 mm ergibt sich somit eine Zugfestigkeit von 3120 N/mm² bis 4150 N/mm².

Vorteilhaft ist es, wenn die Stahl-Monofilamente eine Bruchkraft von 330 N bis 390 N, bevorzugt eine Bruchkraft von 350 N bis 360 N, aufweisen. Vorteilhaft ist es auch, wenn für eine Dehnung der Stahl-Monofilamente um 1% eine Kraft von 204 N bis 242 N, bevorzugt eine Kraft von 210 N bis 230 N, aufgewendet werden muss. Bruchkraft und Dehnungskraft sind gemessen in Anlehnung an die ASTM D 2969, ASTM D 4975 und BISTA E6. Besonders bevorzugt handelt es sich um Stahl-Monofilamente mit Durchmesser D=0,35 mm.

Eine ausreichende Festigkeit, insbesondere gegenüber Schlagbeanspruchung, bei gleichzeitig vorteilhafter geringer Schichtdicke der ersten Gürtellage ist erreicht, wenn die erste Gürtellage bei Belastung in Richtung der Festigkeitsträgerlagenerstreckung eine Schichtfestigkeit im Bereich von A* (4400 - 2000^{∗}D) ^{∗} (D/2)^{2 ∗} π [N] per dm Breite aufweist, wobei A einen Wert von 90 bis 130 einnimmt. Für einen Durchmesser von D = 0,35 mm ergibt sich somit eine Schichtfestigkeit von 32038 N per dm Breite bis 46278 N per dm Breite.

In einer bezüglich des Zielkonfliktes Handling versus Rollwiderstand vorteilhaften Ausführungsform weist die erste Gürtellage bei vorgegebener Dehnung um 1% in Richtung der Festigkeitsträgerlängserstreckung eine Spannung von B* (4400 - 2000^{∗}D) ^{∗} (D/2)^{2 ∗} π/1,6 [N] per dm Breite auf, wobei B einen Wert von 90 bis 130 einnimmt. Die Kraft-Dehnungskurve zur Ermittlung der Spannung ist gemessen in Anlehnung an die ASTM D 2969, ASTM D 4975 und BISTA E6. Für einen Durchmesser von D = 0,35 mm ergibt sich somit eine Spannung von 20024 N per dm Breite bis 28924 N per dm Breite

Eine vorteilhafte Ausgestaltung des Reifens ergibt sich, wenn die Stahl-Monofilamente in der ersten Gürtellage mit 90 epdm bis 130 epdm, bevorzugt mit 95 epdm oder mit 120 epdm, angeordnet sind. Besonders vorteilhaft ist es, wenn der Durchmesser der Stahl-Monofilamente 0,35 mm und die Fadendichte 90 epdm bis 100 epdm, bevorzugt 95 epdm, beträgt.

Ein Fahrzeugluftreifen weist üblicherweise zwei, drei, vier oder mehr Gürtellagen auf. Jede dieser Lagen kann eine erste Gürtellage sein. Es kann sich um eine radial innerste Lage oder eine radial äußerste Lage oder um eine mittlere Gürtellage handeln.

Vorteilhaft ist es, wenn der Gürtel dabei zwei erste Gürtellagen aufweist, wobei die Stahl-Monofilamente der einen ersten Gürtellage gegenläufig zu den Stahl-Monofilamenten der anderen ersten Gürtellage in Bezug auf die Reifenumfangsrichtung geneigt sind. In Bezug auf Gewicht und Materialeinsatz ist es besonders vorteilhaft, wenn alle Gürtellagen des Reifens erste Gürtellagen sind. Ein solcher Reifen weist einen besonders niedrigen Rollwiderstand auf.

Der vorteilhafte erfindungsgemäße Reifen kann ein Reifen für einen Personenkraftwagen, einen Van, einen Light-Truck, ein Nutzfahrzeug oder ein Kraftrad sein.

Weitere Vorteile der Erfindung werden im Zusammenhang mit den nachfolgenden Beispielen von ersten Gürtellagen, die in erfindungsgemäßen Fahrzeugluftreifen einsetzbar sind, näher erläutert:
In einem ersten Beispiel weist ein Reifen der Reifengröße 205/55 R16 eine erste Gürtellage mit einem Gürtelwinkel von 26° zur Umfangsrichtung als Festigkeitsträger Stahl-Monofilamente mit Durchmesser D = 0,35 mm und einer Fadendichte von 95 epdm auf. Die Stahl-Monofilamente weisen dabei einen Torsionswert von in etwa null Windungen, bei einem Längenmaß vom 200fachen Durchmesser des Stahl-Monofilaments, auf. Die Stahl-Monofilamente weisen eine Zugfestigkeit von 3430 N/mm² bis 4050 N/mm² auf. Die Schicht weist eine Schichtfestigkeit von 32040 N per dm Breite bis 37100 N per dm Breite auf. Weiter weist die erste Gürtellage bei vorgegebener Dehnung um 1% in Richtung der Festigkeitsträgerlängserstreckung eine Spannung von 20025 N per dm Breite bis 22990 N per dm Breite auf.

In einem weiteren Beispiel weist ein Reifen der Reifengröße 185/70 R14 eine erste Gürtellage mit einem Gürtelwinkel von 28° zur Umfangsrichtung als Festigkeitsträger Stahl-Monofilamente mit Durchmesser D = 0,35 mm und einer Fadendichte von 120 epdm auf. Die Stahl-Monofilamente weisen dabei einen Torsionswert von in etwa null Windungen, bei einem Längenmaß vom 200fachen Durchmesser des Stahl-Monofilaments, auf. Die Stahl-Monofilamente weisen eine Zugfestigkeit von 3430 N/mm² bis 4050 N/mm² auf. Die Schicht weist eine Schichtfestigkeit von 39600 N per dm Breite bis 46000 N per dm Breite auf. Weiter weist die erste Gürtellage bei vorgegebener Dehnung um 1% in Richtung der Festigkeitsträgerlängserstreckung eine Spannung von 24480 N per dm Breite bis 28900 N per dm Breite auf.

## Patentansprüche

1. Fahrzeugluftreifen mit einem Gürtel aus zwei oder mehr sich in einem Winkel kreuzenden, Festigkeitsträger aufweisenden Gürtellagen, wobei die Festigkeitsträger innerhalb jeder Gürtellage im Wesentlichen parallel und beabstandet zueinander angeordnet und in Kautschukmaterial eingebettet sind, wobei der Gürtel mindestens eine erste Gürtellage aufweist, deren Festigkeitsträger durch Stahl-Monofilamente der Festigkeitsträgerklasse Ultra-Tensile (UT) mit jeweils einer Zugfestigkeit von 3080 N/mm² bis 4190 N/mm², in Anlehnung an die ASTM D 2969, ASTM D 4975 und BISTA E6 gemessen, gebildet sind, wobei die Stahl-Monofilamente einen Durchmesser D von 0,33 mm bis 0,37 mm aufweisen
**dadurch gekennzeichnet, dass**
die Stahl-Monofilamente einen Torsionswert von in etwa null Windungen, bei einem Längenmaß vom 200fachen Durchmesser des Stahl-Monofilaments, aufweisen.

2. Fahrzeugluftreifen nach Anspruch 1, **dadurch gekennzeichnet, dass** der Durchmesser D 0,34 mm bis 0,36 mm, bevorzugt dass der Durchmesser D 0,35 mm, beträgt.

3. Fahrzeugluftreifen nach einem oder mehreren der vorangehenden Ansprüche, **dadurch gekennzeichnet, dass** die Stahl-Monofilamente jeweils eine Zugfestigkeit von 3820 - 2000^{∗}D [N/mm²] bis 4850 - 2000^{∗}D [N/mm²] aufweisen, wobei D den Durchmesser der Stahl-Monofilamente bezeichnet.

4. Fahrzeugluftreifen nach einem oder mehreren der vorangehenden Ansprüche, **dadurch gekennzeichnet, dass** die Stahl-Monofilamente einen Durchmesser von D=0,35 mm aufweisen, dass sie eine Bruchkraft von 350 N bis 360 N aufweisen und dass eine Dehnung von 1% durch eine Kraft von 204 N bis 242 N, in Anlehnung an die ASTM D 2969, ASTM D 4975 und BISTA E6 gemessen, erwirkt wird.

5. Fahrzeugluftreifen nach einem oder mehreren der vorangehenden Ansprüche, **dadurch gekennzeichnet, dass** die erste Gürtellage bei Belastung in Richtung der Festigkeitsträgerlagenerstreckung eine Schichtfestigkeit im Bereich von A* (4400 - 2000^{∗}D) ^{∗} (D/2)^{2 ∗} π [N] per dm Breite aufweist, wobei A einen Wert von 90 bis 130 einnimmt.

6. Fahrzeugluftreifen nach einem oder mehreren der vorangehenden Ansprüche, **dadurch gekennzeichnet, dass** die erste Gürtellage bei vorgegebener Dehnung um 1% in Richtung der Festigkeitsträgerlängserstreckung eine Spannung von B* (4400 - 2000^{∗}D) ^{∗} (D/2)^{2 ∗} π/1,6 [N] per dm Breite aufweist, wobei B einen Wert von 90 bis 130 einnimmt.

7. Fahrzeugluftreifen nach einem oder mehreren der vorangehenden Ansprüche, **dadurch gekennzeichnet, dass** die Stahl-Monofilamente in der ersten Gürtellage mit 90 epdm bis 130 epdm, bevorzugt mit 95 epdm oder mit 120 epdm, angeordnet sind.

8. Fahrzeugluftreifen nach einem oder mehreren der vorangehenden Ansprüche, **dadurch gekennzeichnet, dass** der Durchmesser der Stahl-Monofilamente 0,35 mm und die Fadendichte 90 epdm bis 100 epdm, bevorzugt 95 epdm, beträgt.

9. Fahrzeugluftreifen nach einem oder mehreren der vorangehenden Ansprüche, **dadurch gekennzeichnet, dass** der Gürtel genau zwei Gürtellagen aufweist, und dass die zwei Gürtellagen erste Gürtellagen sind.

10. Fahrzeugluftreifen nach einem oder mehreren der vorangehenden Ansprüche, **dadurch gekennzeichnet, dass** alle Gürtellagen des Gürtels erste Gürtellagen sind.

11. Fahrzeugluftreifen nach einem oder mehreren der vorangehenden Ansprüche, **dadurch gekennzeichnet, dass** es sich um einen Reifen für einen Personenkraftwagen, einen Van, einen Light-Truck, ein Nutzfahrzeug oder ein Kraftrad handelt.

## Claims

1. Pneumatic vehicle tyre having a belt composed of two or more belt plies which have reinforcement members crossing one another at an angle, wherein the reinforcement members within each belt ply are arranged substantially parallel to and spaced apart from one another and are embedded in rubber material,
wherein the belt has at least one first belt ply, the reinforcement members of which are formed by steel monofilaments of the reinforcement member class Ultra-Tensile (UT) with in each case a tensile strength of 3080 N/mm² to 4190 N/mm², measured in accordance with ASTM D 2969, ASTM D 4975 and BISTA E6, wherein the steel monofilaments have a diameter D of 0.33 mm to 0.37 mm,
**characterized in that**
the steel monofilaments have a torsion value of approximately zero windings in the case of a length dimension of 200 times the diameter of the steel monofilament.

2. Pneumatic vehicle tyre according to Claim 1, **characterized in that** the diameter D amounts to 0.34 mm to 0.36 mm, preferably **in that** the diameter D amounts to 0.35 mm.

3. Pneumatic vehicle tyre according to one or more of the preceding claims,
**characterized in that** the steel monofilaments have in each case a tensile strength of 3820 - 2000^{∗}D [N/mm²] to 4850 - 2000^{∗}D [N/mm²], where D denotes the diameter of the steel monofilaments.

4. Pneumatic vehicle tyre according to one or more of the preceding claims,
**characterized in that** the steel monofilaments have a diameter of D = 0.35 mm, **in that** they have a breaking strength of 350 N to 360 N, and **in that** an elongation of 1% is caused by a force of 204 N to 242 N, measured in accordance with ASTM D 2969, ASTM D 4975 and BISTA E6.

5. Pneumatic vehicle tyre according to one or more of the preceding claims,
**characterized in that** the first belt ply, under load in the direction of the reinforcement member ply extent, has a layer strength in the region of A* (4400 - 2000^{∗}D) ^{∗} (D/2)^{2 ∗} n [N] per dm width, wherein A assumes a value of 90 to 130.

6. Pneumatic vehicle tyre according to one or more of the preceding claims,
**characterized in that** the first belt ply, at a predefined elongation of 1% in the direction of the reinforcement member longitudinal extent, has a stress of B* (4400 - 2000^{∗}D) ^{∗} (D/2)^{2 ∗} π/1.6 [N] per dm width, wherein B assumes a value of 90 to 130.

7. Pneumatic vehicle tyre according to one or more of the preceding claims,
**characterized in that** the steel monofilaments in the first belt ply are arranged with 90 epdm to 130 epdm, preferably with 95 epdm or 120 epdm.

8. Pneumatic vehicle tyre according to one or more of the preceding claims,
**characterized in that** the diameter of the steel monofilaments amounts to 0.35 mm, and the filament density amounts to 90 epdm to 100 epdm, preferably 95 epdm.

9. Pneumatic vehicle tyre according to one or more of the preceding claims,
**characterized in that** the belt has exactly two belt plies, and **in that** the two belt plies are first belt plies.

10. Pneumatic vehicle tyre according to one or more of the preceding claims,
**characterized in that** all belt plies of the belt are first belt plies.

11. Pneumatic vehicle tyre according to one or more of the preceding claims,
**characterized in that** it is a tyre for a passenger motor vehicle, a van, a light truck, a utility vehicle or a motorcycle.

## Revendications

1. Pneu de véhicule comprenant une ceinture constituée par deux ou plus de couches de ceinture comprenant des renforts, se croisant à un angle, les renforts étant agencés essentiellement en parallèle et espacés les uns des autres à l'intérieur de chaque couche de ceinture et étant incorporés dans un matériau de caoutchouc, la ceinture comprenant au moins une première couche de ceinture, dont les renforts sont formés par des monofilaments en acier de la classe de renforts Ultra-Tensile (UT), respectivement avec une résistance à la traction de 3 080 N/mm² à 4 190 N/mm², mesurée conformément à ASTM D 2969, ASTM D 4975 et BISTA E6, les monofilaments en acier présentant un diamètre D de 0,33 mm à 0,37 mm,
**caractérisé en ce que**
les monofilaments en acier présentent une valeur de torsion d'approximativement zéro tour, à une mesure de longueur de 200 fois le diamètre du monofilament en acier.

2. Pneu de véhicule selon la revendication 1, **caractérisé en ce que** le diamètre D est de 0,34 mm à 0,36 mm, de préférence **en ce que** le diamètre D est de 0, 35 mm.

3. Pneu de véhicule selon une ou plusieurs des revendications précédentes, **caractérisé en ce que** les monofilaments en acier présentent respectivement une résistance à la traction de 3 820 - 2 000^{∗}D [N/mm²] à 4 850 - 2 000^{∗}D [N/mm²], D désignant le diamètre des monofilaments en acier.

4. Pneu de véhicule selon une ou plusieurs des revendications précédentes, **caractérisé en ce que** les monofilaments en acier présentent un diamètre de D = 0,35 mm, **en ce qu'**ils présentent une force à la rupture de 350 N à 360 N, et **en ce qu'**un allongement de 1 % est effectué par une force de 204 N à 242 N, mesurée conformément à ASTM D 2969, ASTM D 4975 et BISTA E6.

5. Pneu de véhicule selon une ou plusieurs des revendications précédentes, **caractérisé en ce que** la première couche de ceinture présente lors d'une sollicitation dans la direction de l'extension des couches de renfort une résistance de stratifié dans la plage allant de A* (4 400 - 2 000^{∗}D) ^{∗} (D/2)^{2 ∗} Π [N] par dm de largeur, A prenant une valeur de 90 à 130.

6. Pneu de véhicule selon une ou plusieurs des revendications précédentes, **caractérisé en ce que** la première couche de ceinture présente à un allongement prédéterminé de 1 % dans la direction de l'extension longitudinale des renforts une tension de B* (4 400 - 2 000^{∗}D) ^{∗} (D/2)^{2 ∗} Π/1,6 [N] par dm de largeur, B prenant une valeur de 90 à 130.

7. Pneu de véhicule selon une ou plusieurs des revendications précédentes, **caractérisé en ce que** les monofilaments en acier sont agencés dans la première couche de ceinture avec 90 epdm à 130 epdm, de préférence avec 95 epdm ou avec 120 epdm.

8. Pneu de véhicule selon une ou plusieurs des revendications précédentes, **caractérisé en ce que** le diamètre des monofilaments en acier est de 0,35 mm et la densité des fils est de 90 epdm à 100 epdm, de préférence de 95 epdm.

9. Pneu de véhicule selon une ou plusieurs des revendications précédentes, **caractérisé en ce que** la ceinture comprend exactement deux couches de ceinture, et **en ce que** les deux couches de ceinture sont des premières couches de ceinture.

10. Pneu de véhicule selon une ou plusieurs des revendications précédentes, **caractérisé en ce que** toutes les couches de ceinture de la ceinture sont des premières couches de ceinture.

11. Pneu de véhicule selon une ou plusieurs des revendications précédentes, **caractérisé en ce qu'**il s'agit d'un pneu pour une voiture particulière, une camionnette, un camion léger, un véhicule utilitaire ou une motocyclette.
